# EUROPÄISCHE PATENTSCHRIFT

(11) **EP 1 126 998 B1**
(45) Veröffentlichungstag und Bekanntmachung des Hinweises auf die Patenterteilung: **18.06.2003**
(21) Anmeldenummer: 99971384.5
(22) Anmeldetag: 28.10.1999
(51) Int. Cl.: B60T 13/57, B60T 7/12

(54) **UNTERDRUCKBREMSKRAFTVERSTÄRKER MIT MAGNETLOSER NOTBREMSHILFE**
VACUUM BRAKE BOOSTER WITH A NON-MAGNETIC EMERGENCY BRAKING ASSISTANCE SYSTEM
SERVOFREIN A DEPRESSION AVEC ASSISTANCE DE FREINAGE D'URGENCE NON MAGNETIQUE

(30) Priorität: 02.11.1998 DE 19850478
(43) Veröffentlichungstag der Anmeldung: 29.08.2001
(73) Patentinhaber: LUCAS INDUSTRIES PUBLIC LIMITED COMPANY, Solihull B90 4LA (GB)
(72) Erfinder: SCHLÜTER, Peter, D-56206 Kammerforst (DE)
(74) Vertreter: Beyer, Andreas, Dr.
(86) Internationale Anmeldenummer: EP9908203
(87) Internationale Veröffentlichungsnummer: WO00026073

(56) Entgegenhaltungen:
- DE-A- 4 441 913
- DE-C- 4 405 092

## Beschreibung

Die Erfindung betrifft Unterdruckbremskraftverstärker mit einer Unterdruckkammer und einer davon durch eine bewegliche Wand druckdicht getrennten Arbeitskammer sowie einem Steuerventil, das ein mit der beweglichen Wand kraftübertragend gekoppeltes Gehäuse und einen darin angeordneten ersten Ventilsitz aufweist, der im Zusammenspiel mit einem ersten Ventildichtglied die Zufuhr von zumindest Atmosphärendruck zur Arbeitskammer in Abhängigkeit der Verschiebung eines mit dem ersten Ventilsitz gekoppelten Eingangsgliedes des Bremskraftverstärkers zu steuern vermag, um eine Druckdifferenz an der beweglichen Wand zu erzielen. Unterdruckbremskraftverstärker dieser Art sind seit langem bekannt und befinden sich millionenfach im Einsatz, um die Betätigungskräfte einer hydraulischen Fahrzeugbremsanlage zu unterstützen und dadurch auf einem für den Fahrer eines Fahrzeuges angenehm niedrigen Niveau zu halten.

Ebenfalls bekannt sind sogenannte Bremsassistenten. Unter diesem Begriff versteht man üblicherweise ein System, welches einem Fahrer im Fall einer Notbremsung bei im wesentlichen gleicher Betätigungskraft eine erhöhte Bremsleistung zur Verfügung stellen kann. Systeme dieser Art wurden entwickelt, weil Untersuchungen ergeben haben, daß die Mehrzahl der Fahrzeugbenutzer bei einer Notbremsung zwar schnell, aber nicht so stark auf das Bremspedal tritt, wie es zum Erreichen der maximal möglichen Bremsleistung erforderlich wäre. Der Anhalteweg des Fahrzeugs ist deshalb länger als notwendig. Bereits in Produktion befindliche Systeme dieser Art verwenden einen elektromagnetisch betätigbaren Bremskraftverstärker in Verbindung mit einer Einrichtung, die die Betätigungsgeschwindigkeit des Bremspedals ermitteln kann. Stellt diese Einrichtung eine über einem vorgegebenen Schwellenwert liegende Betätigungsgeschwindigkeit fest, wird angenommen, daß eine Notbremssituation vorliegt und der Bremskraftverstärker wird mittels der elektromagnetischen Betätigungseinrichtung voll ausgesteuert, d.h. er stellt seine höchstmögliche Verstärkungsleistung bereit. Ein Bremskraftverstärker mit einem solchen elektromagnetisch betätigten Bremsassistenten ist aus der DE 44 05 092 C1 bekannt.

Bremskraftverstärker mit elektromagnetischer Betätigungsmöglichkeit sind für Kraftfahrzeuge der unteren und mittleren Preisklasse jedoch zu teuer. Es besteht deshalb der Wunsch nach Lösungen, die eine Bremsassistentfunktion mit geringerem Aufwand erreichen.

Der Erfindung liegt die Aufgabe zugrunde, einen Unterdruckbremskraftverstärker der genannten Art mit einer Bremsassistentfunktion bereitzustellen, ohne dabei auf ein elektromagnetisch betätigbares Steuerventil zurückgreifen zu müssen. Dabei soll eine unbeabsichtigte Auslösung der Bremsassistentfunktion soweit wie möglich vermieden sein.

Diese Aufgabe ist erfindungsgemäß durch einen Unterdruckbremskraftverstärker gelöst, der die im Patentanspruch 1 angegebenen Merkmale aufweist.

Demnach ist der erste Ventilsitz an einem verschiebbaren Ventilglied ausgebildet, das in Betätigungsrichtung des Bremskraftverstärkers mit dem Eingangsglied gekoppelt ist. Erfindungsgemäß ist das verschiebbare Ventilglied auf seiner dem Eingangsglied zugewandten Rückseite immer dem in der Arbeitskammer herrschenden Druck ausgesetzt. Wird das verschiebbare Ventilglied jedoch relativ zum Steuerventilgehäuse in Betätigungsrichtung um mehr als eine vorab festgelegte Strecke verschoben, dann ist das verschiebbare Ventilglied auf zumindest einem Teil seiner Vorderseite, die der Rückseite gegenüberliegt, dem in der Unterdruckkammer herrschenden Druck ausgesetzt und die dann am verschiebbaren Ventilglied wirkende Druckdifferenz hält das Ventilglied solange in der erreichten Stellung fest, bis ein Druckausgleich zwischen der Vorderseite und der Rückseite des verschiebbaren Ventilgliedes stattfindet.

Erfindungsgemäß wird also die jeweils an der beweglichen Wand herrschende Druckdifferenz dazu benutzt, eine in Betätigungsrichtung auf das verschiebbare Ventilglied wirkende Kraft auszuüben, um den ersten Ventilsitz, der an dem verschiebbaren Ventilglied ausgebildet ist, in bestimmten Situationen vollständig offen zu halten, in denen die vom Fahrer ausgeübte Betätigungskraft dazu nicht ausreicht, so daß der Bremskraftverstärker zwischen seiner Unterdruckkammer und seiner Arbeitskammer die höchstmögliche Druckdifferenz aufbaut, d.h. seine maximale Verstärkungsleistung bereitstellt.

Bei dem erfindungsgemäßen Unterdruckbremskraftverstärker wird das verschiebbare Ventilglied nach Überschreiten der erwähnten, vorab festgelegten Relativverschiebung also regelrecht in eine Stellung "gesaugt", in der der erste Ventilsitz voll geöffnet ist. Diese notwendige Relativverschiebung wird allerdings nur dann erreicht, wenn die Betätigungsgeschwindigkeit des Eingangsgliedes einen definierten Wert überschreitet. Bei dem erfindungsgemäßen Unterdruckbremskraftverstärker wird die Bremsassistentfunktion demnach allein durch das geschickte Ausnutzen vorhandener Druckdifferenzen innerhalb des Bremskraftverstärkers aktiviert. Ein Magnet wird zur Auslösung der Bremsassistentfunktion nicht benötigt.

Das Lösen der Bremsassistentfunktion geschieht beim erfindungsgemäßen Unterdruckbremskraftverstärker durch einen Abbau der auf das verschiebbare Ventilglied wirkenden Druckdifferenz. Der Abbau dieser Druckdifferenz wird durch eine ein bestimmtes Maß übersteigende Rückkehrbewegung des Eingangsgliedes ausgelöst.

Bei bevorzugten Ausführungsbeispielen des erfindungsgemäßen Unterdruckbremskraftverstärkers ist das verschiebbare Ventilglied federnd entgegen der Betätigungsrichtung des Bremskraftverstärkers vorgespannt. Diese federnde Vorspannung sorgt auf vorteilhafte Weise für eine Koppelung des verschiebbaren Ventilgliedes mit dem Eingangsglied in Betätigungsrichtung des Bremskraftverstärkers und ermöglicht andererseits bei aktivierter Bremsassistentfunktion die Entkoppelung des verschiebbaren Ventilgliedes von dem Eingangsglied. Bei solchen Ausführungsformen muß die aufgrund der Druckdifferenz auf das verschiebbare Ventilglied wirkende Kraft größer als die entgegengerichtet auf das Ventilglied wirkende Federkraft sein, um die Bremsassistentfunktion auszulösen. Dieser Forderung läßt sich durch eine geeignete Bemessung derjenigen Flächen des Ventilgliedes, die der Druckdifferenz ausgesetzt sind, einfach Rechnung tragen.

Vorzugsweise ist bei dem erfindungsgemäßen Unterdruckbremskraftverstärker an dem verschiebbaren Ventilglied ein zweiter Ventilsitz ausgebildet, der mit einem zweiten Ventildichtglied zusammenwirkt, das seinerseits mit einem dritten Ventilsitz zusammenwirkt, der in geöffnetem Zustand eine Verbindung zwischen der Arbeitskammer und der Unterdruckkammer herstellt. Nach Überschreiten der vorab festgelegten Verschiebung des Ventilgliedes bezüglich des Steuerventilgehäuses ist der zweite Ventilsitz geschlossen und der dritte Ventilsitz geöffnet, so daß nunmehr der in der Unterdruckkammer herrschende Druck auf das verschiebbare Ventilglied wirken kann.

Bei besonders bevorzugten Ausführungsbeispielen ist der zweite Ventilsitz auf der Vorderseite des verschiebbaren Ventilgliedes ausgebildet. Zwischen dem zweiten Ventilsitz und dem dritten Ventilsitz, die beide vorzugsweise ringförmig sind, ist ein ringförmiger Hohlraum begrenzt, dessen stirnseitige Begrenzung auf einer Seite durch das verschiebbare Ventilglied gebildet ist. Insbesondere ist der dritte Ventilsitz konzentrisch zum und radial außerhalb des zweiten Ventilsitzes angeordnet. Bei geschlossenem zweiten Ventilsitz und geöffnetem dritten Ventilsitz ist der ringförmige Hohlraum mit der Unterdruckkammer verbunden, während er bei geöffnetem zweiten Ventilsitz und geschlossenem dritten Ventilsitz mit der Arbeitskammer verbunden ist. Auf diese Weise kann die sich radial zwischen dem zweiten Ventilsitz und dem dritten Ventilsitz befindende Fläche des verschiebbaren Ventilgliedes entweder dem Druck in der Unterdruckkammer oder dem Druck in der Arbeitskammer ausgesetzt werden.

Um eine am verschiebbaren Ventilglied wirkende Druckdifferenz abbauen zu können, weist das verschiebbare Ventilglied gemäß einer Ausführungsform des erfindungsgemäßen Unterdruckbremskraftverstärkers einen Kanal auf, der die Vorderseite des Ventilgliedes mit seiner Rückseite verbindet. Dieser normalerweise geschlossene Kanal kann durch eine Verschiebung des Eingangsgliedes oder eines damit gekoppelten Bauteils geöffnet werden, die relativ zum verschiebbaren Ventilglied entgegen der Betätigungsrichtung des Bremskraftverstärkers erfolgt und ein vorab festgelegtes Maß übersteigt. Das vorab festgelegte Maß stellt sicher, daß die Bremsassistentfunktion nicht ungewollterweise zu früh abgeschaltet wird.

Gemäß einer bevorzugten Ausgestaltung des erfindungsgemäßen Bremskraftverstärkers ist der die Vorderseite mit der Rückseite des verschiebbaren Ventilgliedes verbindende Kanal mittels einer Ringdichtung verschließbar, die zwei axial voneinander beabstandete, umlaufende Dichtlippen aufweist. Die Ringdichtung ist in einem Bauteil aufgenommen, das auf oder in dem verschiebbaren Ventilglied geführt und axial relativ zum Ventilglied verschiebbar ist. Der axiale Abstand der beiden umlaufenden Dichtlippen bestimmt dabei im wesentlichen das Maß der Relativverschiebung zwischen dem Bauteil und dem Ventilglied, das notwendig ist, um den Kanal zu öffnen und einen Druckausgleich herbeizuführen.

Bei bevorzugten Ausführungsformen des erfindungsgemäßen Bremskraftverstärkers ist das zweite Ventildichtglied federnd entgegen der Betätigungsrichtung des Bremskraftverstärkers vorgespannt und gegen diese Federvorspannung axial verschiebbar. Das Maß der axialen Verschiebbarkeit des zweiten Ventildichtgliedes repräsentiert dabei die Schaltschwelle, die überwunden werden muß, um die Bremsassistentfunktion auszulösen. Bei solchen Ausführungsformen muß die aus der Druckdifferenz am verschiebbaren Ventilglied resultierende Kraft größer als die Summe der entgegengerichtet wirkenden Federkräfte sein, die das zweite Ventildichtglied bzw. das verschiebbare Ventilglied vorspannen, damit die Bremsassistentfunktion ausgelöst wird.

Um eine platzsparende Konstruktion zu realisieren, hat das verschiebbare Ventilglied vorzugsweise eine im wesentlichen hülsenförmige Gestalt. Der erste Ventilsitz ist dabei an dem dem Eingangsglied zugewandten Ende des Ventilgliedes ausgebildet, während sich der zweite Ventilsitz am gegenüberliegenden Ende des Ventilgliedes befindet. Ein solches hülsenförmiges, verschiebbares Ventilglied kann in herkömmliche Steuerventilkonstruktionen integriert werden, ohne deren Durchmesser oder Baulänge spürbar zu beeinflussen.

Vorzugsweise ist bei allen Ausführungsformen des erfindungsgemäßen Unterdruckbremskraftverstärkers auch das Eingangsglied federnd entgegen der Betätigungsrichtung vorgespannt. Bei einem Lösen der Bremse stellt diese federnde Vorspannung das Eingangsglied in die Ausgangsstellung zurück. In konstruktiv vorteilhafter weise wird diese federnde Vorspannung des Eingangsgliedes während seiner Rückkehrbewegung in die Ausgangsstellung dazu benutzt, das zuvor genannte Bauteil, in dem die Ringdichtung aufgenommen ist, relativ zum verschiebbaren Ventilglied zurückzubewegen, um so den im Ventilglied vorhandenen Kanal zu öffnen und die Bremsassistentfunktion abzuschalten.

Ein bevorzugtes Ausführungsbeispiel eines erfindungsgemäßen Unterdruckbremskraftverstärkers wird im folgenden anhand der beigefügten, schematischen Zeichnungen näher erläutert. Es zeigt:
- Fig. 1: einen Längsschnitt durch den interessierenden Bereich eines erfindungsgemäßen Unterdruckbremskraftverstärkers in einer Ruhestellung,
- Fig. 2: die Ansicht gemäß Fig. 1 in einer Betätigungsstellung, in der eine Bremsassistentfunktion aktiviert ist,
- Fig. 3: die Ansicht gemäß Fig. 2 bei zurückgenommener Betätigungskraft, und
- Fig. 4: die Ansicht gemäß Fig. 1 und Fig. 2 kurz vor dem Abschalten der Bremsassistentfunktion.

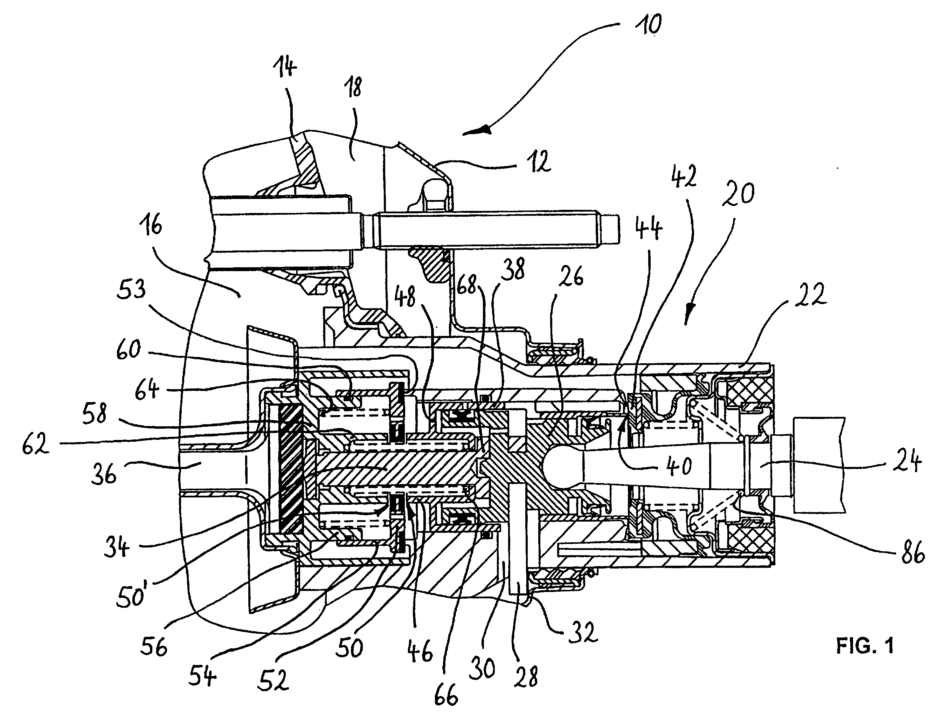

In Fig. 1 ist ein Unterdruckbremskraftverstärker 10 mit einem Gehäuse 12 gezeigt, dessen Innenraum durch eine bewegliche Wand 14 in eine Unterdruckkammer 16 und eine Arbeitskammer 18 unterteilt ist.

Die Unterdruckkammer 16 steht im Betrieb des Bremskraftverstärkers 10 ständig mit einer Unterdruckquelle in Verbindung, beispielsweise mit dem Ansaugtrakt einer Verbrennungsmotors oder mit einer Unterdruckpumpe. Ein Steuerventil 20 mit einem Gehäuse 22 dient dazu, eine Verbindung entweder zwischen der Unterdruckkammer 16 und der Arbeitskammer 18 herzustellen, um die Arbeitskammer 18 zu evakuieren, oder eine Verbindung zwischen der evakuierten Arbeitskammer 18 und der Umgebungsatmosphäre, d.h. dem Umgebungsdruck herzustellen. Die bewegliche Wand 14 ist kraftübertragend mit dem Steuerventilgehäuse 22 gekoppelt.

Der Bremskraftverstärker 10 wird mittels eines stangenförmigen, federnd in seine Ausgangsstellung vorgespannten Eingangsgliedes 24 betätigt, das längs einer Achse A in das Steuerventilgehäuse 22 ragt und mit seinem einen, kugelig ausgeführten Ende in einem Übertragungskolben 26 befestigt ist.

Mit dem Übertragungskolben 26 starr verbunden ist ein Riegel 28, der sich rechtwinklig zur Achse A von dem Übertragungskolben 26 weg und durch einen im Steuerventilgehäuse 22 ausgebildeten Kanal 30 erstreckt. In der in Fig. 1 gezeigten Position liegt der Riegel 28 an einem Anschlag 32 des Bremskraftverstärkergehäuses 12 an, der die Ruhestellung des Steuerventils 20 definiert, d.h. die Stellung aller Bauteile des Steuerventils 20 zueinander, die diese bei unbetätigtem Bremskraftverstärker 10 einnehmen (LTF-Stellung). Die Seitenwände des Kanals 30 begrenzen die Bewegungsmöglichkeit des Riegels 28 längs der Achse A, d.h. der maximale Hub des Riegels 28 längs der Achse A ist durch den Abstand gegeben, den die Seitenwände des Kanals 30 in axialer Richtung voneinander haben.

Das dem kugelig ausgeführten Ende des Eingangsgliedes 24 gegenüberliegende Ende des Übertragungskolbens 26 liegt an einem Kraftabgabestößels 34 an, der eine über das Eingangsglied 24 in den Bremskraftverstärker 10 eingeleitete Betätigungskraft auf einen dem Bremskraftverstärker nachgeschalteten Hauptzylinder einer hydraulischen Fahrzeugbremsanlage überträgt, von dem in den Figuren nur ein Teil eines Eingangskolbens 36 wiedergegeben ist.

Der Übertragungskolben 26 und ein Teil des Kraftabgabestößels 34 werden von einem konzentrisch zu ihnen angeordneten, verschiebbaren Ventilglied 38 umgeben, das eine im wesentlichen hülsenförmige Gestalt hat. An dem freien Ende des Ventilgliedes 38, das dem Eingangsglied 24 benachbart ist, ist ein erster ringförmiger Ventilsitz 40 des Steuerventils 20 ausgebildet. Der erste Ventilsitz 40 wirkt mit einem federnd gegen ihn vorgespannten, ebenfalls ringförmigen ersten Ventildichtglied 42 zusammen und kann die Verbindung zwischen der Umgebungsatmosphäre und der Arbeitskammer 18 des Bremskraftverstärkers 10 steuern.

Radial außerhalb des ersten Ventilsitzes 40 und konzentrisch zu diesem ist innen am Steuerventilgehäuse 22 ein weiterer ringförmiger Ventilsitz 44 des Steuerventils 20 ausgebildet, der im folgenden als vierter Ventilsitz bezeichnet wird und der ebenfalls mit dem ersten Ventildichtglied 42 zusammenwirkt. Dieser vierte Ventilsitz 44 kann die Verbindung zwischen der Unterdruckkammer 16 und der Arbeitskammer 18 des Bremskraftverstärkers 10 steuern, um nach seiner Betätigung die Arbeitskammer 18 wieder zu evakuieren.

An dem vom Eingangsglied 24 entfernten Ende des verschiebbaren Ventilgliedes 38 ist am freien Ende einer Hülse 46, die einen kleineren Durchmesser als das Ventilglied 38 hat und über einen Ringflansch 48 einstückig mit dem Ventilglied 38 verbunden ist, ein zweiter ringförmiger Ventilsitz 50 ausgebildet, der mit einem federnd gegen ihn vorgespannten zweiten Ventildichtglied 52 zusammenwirkt, das ebenfalls ringförmig ist.

Radial außerhalb des zweiten Ventilsitzes 50 ist am Steuerventilgehäuse 22 ein dritter, wiederum ringförmiger Ventilsitz 53 ausgebildet, der konzentrisch zum zweiten Ventilsitz 50 angeordnet ist und der ebenfalls mit dem zweiten Ventildichtglied 52 zusammenwirkt. Die Funktion sowohl des zweiten Ventilsitzes 50 als auch des dritten Ventilsitzes 53 wird untenstehend noch näher erläutert werden.

Das zweite Ventildichtglied 52 ist mittels eines sich von ihm in Richtung des Eingangskolbens 36 erstreckenden zylindrischen Fortsatzes 54 auf einem entsprechend ausgeführten Abschnitt 56 eines Hilfsgehäuses 58 axial verschiebbar geführt und durch eine Dichtung 60 gegenüber dem Abschnitt 56 abgedichtet. Das Hilfsgehäuse 58, das in den inneren Endbereich des Steuerventilgehäuses 22 eingesetzt und mit letzterem fest verbunden ist, weist einen in das Steuerventilgehäuse 22 ragenden, hohlzylindrischen Fortsatz 62 auf, der einen kleineren Außendurchmesser als der konzentrisch zu ihm angeordnete, ebenfalls hohlzylindrische Abschnitt 56 hat. In dem hohlzylindrischen Fortsatz 62 ist das dem Eingangskolben 36 zugewandte Ende des Kraftabgabestößels 34 aufgenommen. Am freien Ende des hohlzylindrischen Fortsatzes 62 ist ein ringförmiger Ventilsitz 50' ausgebildet, der den gleichen Durchmesser wie der zweite Ventilsitz 50 aufweist und mit diesem im vorliegenden Ausführungsbeispiel eine funktionelle Einheit bildet. Der Ventilsitz 50' wirkt auf der vom zweiten Ventilsitz 50 abgewandten Seite des zweiten Ventildichtgliedes 52 mit letzterem zusammen.

Zwischen dem hohlzylindrischen Fortsatz 62 und dem Abschnitt 56 ist eine Druckfeder 64 angeordnet, die sich auf einer Seite am Boden des Hilfsgehäuses 58 und auf der gegenüberliegenden anderen Seite am zweiten Ventildichtglied 52 abstützt. Die Druckfeder 64 spannt das zweite Ventildichtglied 52 entgegen der Betätigungsrichtung des Bremskraftverstärkers 10 und in Richtung auf den zweiten Ventilsitz 50 und den dritten Ventilsitz 53 vor.

Eine weitere Druckfeder 66, die den Kraftabgabestößel 34 konzentrisch umgibt und sich mit ihrem einen Ende am Hilfsgehäuse 58 abstützt, drückt mit ihrem anderen Ende gegen einen radial nach innen gerichteten, umlaufenden Kragen 67 der Hülse 46 des verschiebbaren Ventilgliedes 38, so daß das Ventilglied 38 entgegen der Betätigungsrichtung des Bremskraftverstärkers 10 vorgespannt und normalerweise in Anlage mit einem am Kraftabgabestößel 34 ausbildeten Ringbund 68 gehalten ist.

Wie in Fig. 1 dargestellt, ragt der Riegel 28 durch eine Ausnehmung 70 des verschiebbaren Ventilgliedes 38. In der Ausnehmung 70 hat der Riegel 28 längs der Achse A ein Spiel, das kleiner als der maximal mögliche Hub des Riegels 28 in dem Kanal 30 ist.

Anhand der Figuren 1 bis 4 wird nun die Funktion des dargestellten Bremskraftverstärkers 10 näher erläutert. Eine Betätigung des Bremskraftverstärkers 10 verschiebt das Eingangsglied 24 in den Bremskraftverstärker 10 bzw. in sein Steuerventil 20 hinein, d.h. in den Figuren nach links. Diese Verschiebung des Eingangsgliedes 24 wird auf den Übertragungskolben 26 und von diesem auf den Kraftabgabestößel 34 übertragen. Der Kraftabgabestößel 34 wiederum überträgt diese Verschiebung mittels des an ihm ausgebildeten Ringbundes 68 auf das verschiebbare Ventilglied 38, so daß der erste Ventilsitz 40 vom ersten Ventildichtglied 42 abgehoben wird, wodurch Umgebungsluft durch einen das Eingangsglied 24 umgebenden Kanal 72, vorbei am geöffneten ersten Ventilsitz 40 und weiter durch den Kanal 30 in die Arbeitskammer 18 des Bremskraftverstärkers 10 strömen kann. An der beweglichen Wand 14 entsteht daraufhin eine Druckdifferenz und die daraus resultierende Kraft wird von der beweglichen Wand 14 auf das Steuerventilgehäuse 22 übertragen, welches die Kraft über den Eingangskolben 36 an den bereits genannten Hauptzylinder abgibt.

Weil das verschiebbare Ventilglied 38 wie beschrieben in Betätigungsrichtung des Bremskraftverstärkers mit dem Eingangsglied 24 gekoppelt ist, wird der erste Ventilsitz 40 des Steuerventils 20 in Abhängigkeit der relativ zum Steuerventilgehäuse 22 erfolgenden Verschiebung des Eingangsgliedes 24 mehr oder weniger weit geöffnet. Aus der jeweils an der beweglichen Wand 14 wirkenden Druckdifferenz resultiert eine entsprechende Unterstützungskraft des Bremskraftverstärkers 10.

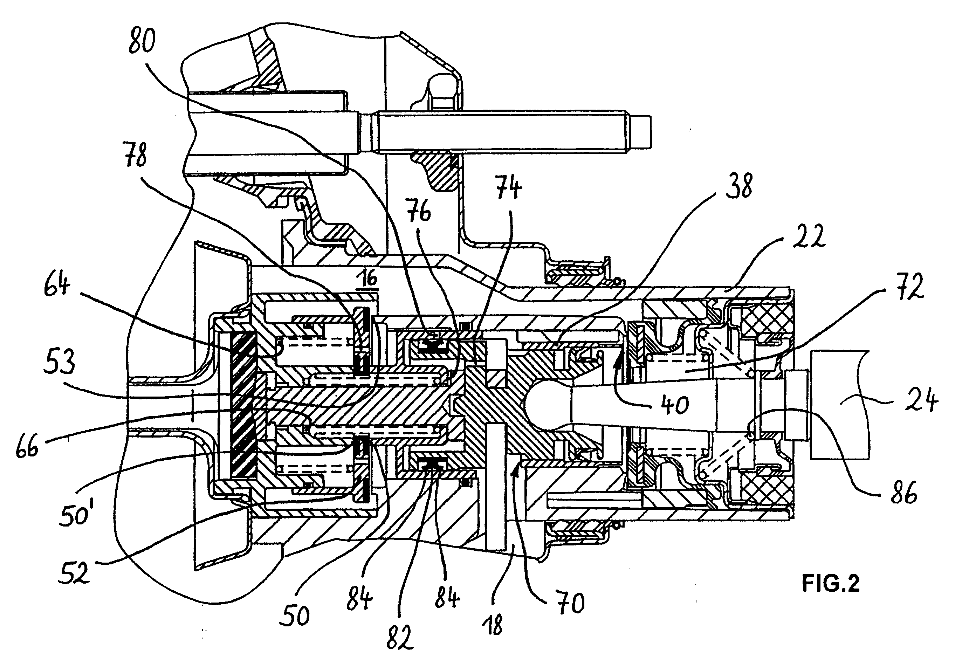

Bei üblichen Betriebsbremsungen, die hier als Normalbremsungen bezeichnet werden, wird das Eingangsglied 24 und damit auch das verschiebbare Ventilglied 38 nur relativ wenig in Betätigungsrichtung verschoben. Dies hat zur Folge, daß sich während einer solchen Normalbremsung zwar der zweite Ventilsitz 50 an das zweite Ventildichtglied 52 anlegt, nicht jedoch der mit ihm zusammenwirkende Ventilsitz 50'. Eine nennenswerte axiale Verschiebung des zweiten Ventildichtgliedes 52 tritt nicht auf, so daß der dritte Ventilsitz 53 geschlossen bleibt. Bei einer Normalbremsung steht deshalb der in der Arbeitskammer 18 herrschende Druck durch eine im Übertragungskolben 26 vorhandene Öffnung 74 (sh. Fig. 2) und weiter durch einen am Ringbund 68 ausgebildeten Kanal 76 (sh. Fig. 2) sowie durch den dann offenen Ventilsitz 50' und Druckausgleichsöffnungen 78, die im zweiten Ventildichtglied 52 vorhanden sind, sowohl auf der Rückseite als auch auf der Vorderseite des Ringflansches 48 des Ventilgliedes 38 an. Es wirkt demnach an dem verschiebbaren Ventilglied 38 und insbesondere an seinem Ringflansch 48 bei einer Normalbremsung keine Druckdifferenz.

Wird eine im Rahmen einer Normalbremsung auf das Eingangsglied 26 aufgebrachte Betätigungskraft nicht erhöht, so kommt das erste Ventildichtglied 42 aufgrund der Verschiebung des Steuerventilgehäuses 22, die durch die an der beweglichen Wand 14 anliegende Druckdifferenz hervorgerufen wird, wieder in Anlage mit dem ersten Ventilsitz 40, so daß die Luftzufuhr in die Arbeitskammer 18 unterbrochen ist (Gleichgewichtsstellung, beide Ventilsitze 40 und 44 geschlossen).

Bei einer schnell und mit relativ großem Hub erfolgenden Betätigung des Eingangsgliedes 24 jedoch, wie sie typisch für eine Panikbremsung (Notbremsung) ist, wird das verschiebbare Ventilglied 38 relativ zum Steuerventilgehäuse 22 soweit in Betätigungsrichtung verschoben, daß sowohl der zwischen dem zweiten Ventilsitz 50 und dem zweiten Ventildichtglied 52 bestehende axiale Abstand als auch der zwischen dem Ventilsitz 50' und dem zweiten Ventildichtglied 52 bestehende axiale Abstand nahezu augenblicklich überwunden wird. Betrachtet man den Ablauf genauer, so legt sich zunächst der zweite Ventilsitz 50 dichtend an das zweite Ventildichtglied 52 an und verschiebt dieses dann gegen die Kraft der Druckfeder 64 in Betätigungsrichtung, so daß auch der Ventilsitz 50' in dichtende Anlage mit dem zweiten Ventildichtglied 52 gerät.

Aufgrund der Verschiebung des zweiten Ventildichtgliedes 52 ist der dritte Ventilsitz 53 geöffnet worden, so daß der in der Unterdruckkammer 16 herrschende Unterdruck in einen ringförmigen Hohlraum B gelangen kann, der zwischen den geschlossenen Ventilsitzen 50, 50' und dem dritten Ventilsitz 53 begrenzt ist. In dem ringförmigen Hohlraum B stellt sich nach dem Öffnen des Ventilsitzes 53 relativ schnell der in der Unterdruckkammer vorherrschende Druck ein, der dann auch auf die Vorderseite des Ringflansches 48 des Ventilgliedes 38 wirkt.

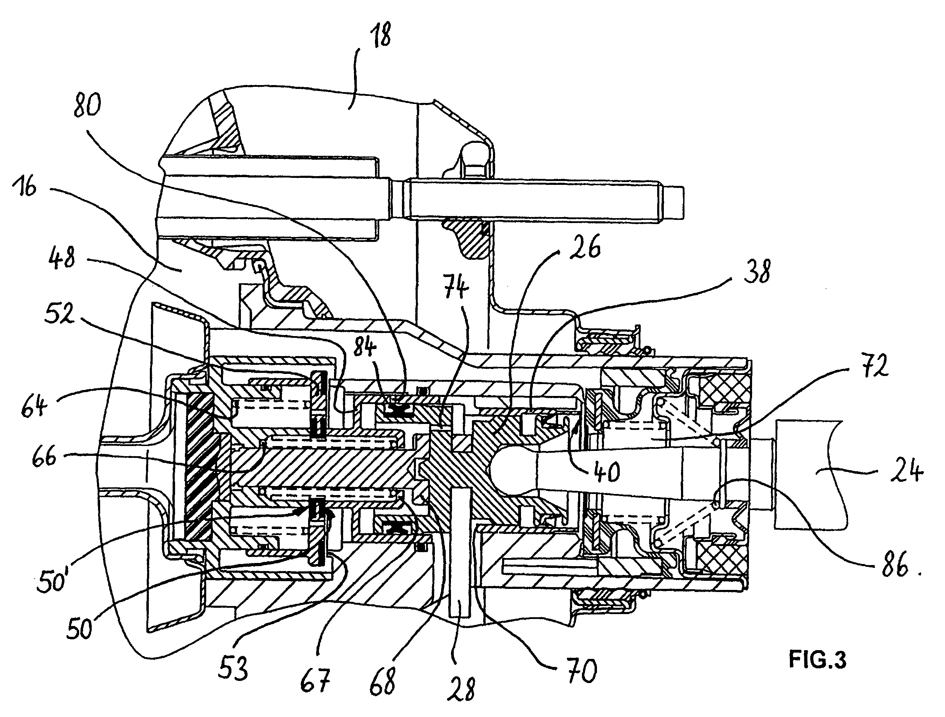

Auf die Rückseite des Ringflansches 48 wirkt jedoch nach wie vor der in der Arbeitskammer 18 herrschende Druck. Die somit am Ringflansch 48 anliegende Druckdifferenz führt zu einer in Betätigungsrichtung auf das verschiebbare Ventilglied 38 wirkenden Kraft, die durch geeignete Bemessung der Fläche des Ringflansches 48 größer als die entgegengerichtete Kraft der beiden Druckfedern 64 und 66 ist. Auf diese Weise ist sichergestellt, daß das verschiebbare Ventilglied 38 in der in Fig. 2 wiedergegebenen Stellung gehalten wird, d.h. der erste Ventilsitz 40 geöffnet bleibt (Bremsassistentfunktion, siehe Fig. 2), selbst wenn das Eingangsglied 24 sich im weiteren Verlauf der Notbremsung aufgrund der sich dann einstellenden, hohen Rückwirkkräfte etwas entgegen der Betätigungsrichtung verschiebt (sh. Fig. 3). Das verschiebbare Ventilglied 38 bleibt durch den in diesem Betätigungszustand im ringförmigen Hohlraum B vorhandenen Unterdruck quasi am zweiten Ventildichtglied 52 "festgesaugt", auch wenn sich der Ringbund 68 von dem Kragen 67 der Hülse 46 löst (siehe Fig. 3).

Zum Abschalten der Bremsassistentfunktion muß bezüglich des Ringflansches 48 ein Druckausgleich erfolgen. Zu diesem Zweck ist in dem verschiebbaren Ventilglied 38 eine Radialbohrung 80 vorhanden, die einerseits mit dem ringförmigen Hohlraum B in ständiger Verbindung steht und andererseits mit der Rückseite des Ringflansches 48 in Verbindung gebracht werden kann. Die Verbindung zum Innenraum des verschiebbaren Ventilgliedes 38 und damit zur Rückseite des Ringflansches 48 steuert eine Ringdichtung 82, die im Übertragungskolben 26 aufgenommen ist und die zwei axial voneinander beabstandete, umlaufende Dichtlippen 84 aufweist. Solange sich die Radialbohrung 80 axial zwischen den zwei Dichtlippen 84 befindet, ist die Verbindung zwischen der Radialbohrung 80 und dem Innenraum des verschiebbaren Ventilgliedes 38 unterbrochen. Erst wenn der Übertragungskolben 26 relativ zum Ventilglied 38 soweit zurückbewegt worden ist, daß die in den Figuren linke Dichtlippe 84 die Radialbohrung 80 entgegen der Betätigungsrichtung des Bremskraftverstärkers überfahren hat, besteht eine Fluidverbindung zwischen dem Innenraum des verschiebbaren Ventilgliedes 38 und dem ringförmigen Hohlraum B, so daß der erwähnte Druckausgleich stattfinden kann.

Nach durchgeführtem Druckausgleich entfällt die aus der Druckdifferenz am Ringflansch 48 resultierende Kraft in Betätigungsrichtung, so daß die Druckfeder 64 das zweite Ventildichtglied 52 in Anlage an den dritten Ventilsitz 53 bewegt und die Druckfeder 66 das verschiebbare Ventilglied 38 in Anlage an den Ringbund 68 des Kraftabgabestößels 34 drückt. Die Bremsassistentfunktion ist damit abgeschaltet und die Ventilsitze 50 und 50' sind wieder geöffnet.

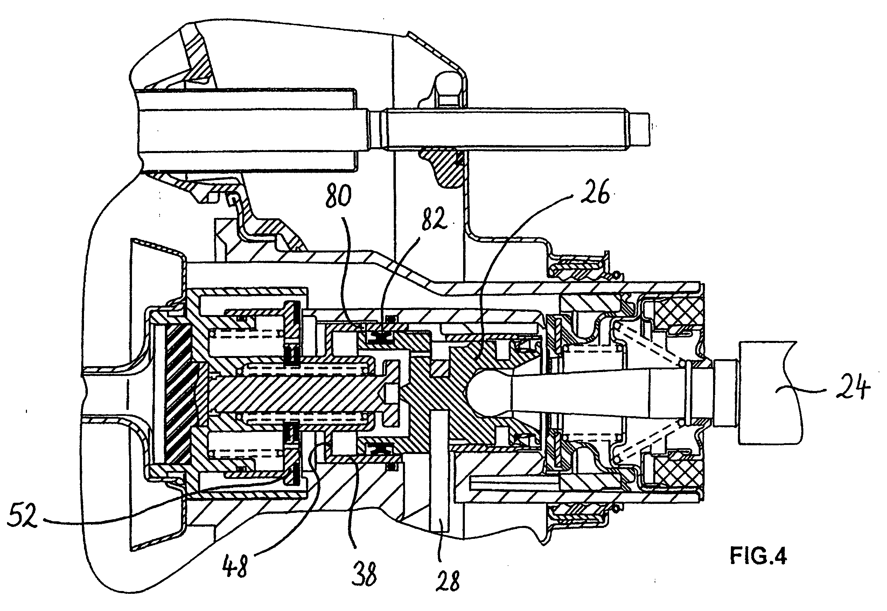

Bewegt sich das Eingangsglied 24 sehr schnell zurück, kann die Bremsassistentfunktion auch noch auf eine zweite Art und Weise abgeschaltet werden. Bei einer schnellen Rückkehrbewegung des Eingangsgliedes 24 stößt nämlich der Riegel 28 gegen den in Fig. 3 rechten Rand der Ausnehmung 70 im Ventilglied 38 (siehe Figur 4), wodurch auf das verschiebbare Ventilglied 38 nicht nur die Kraft der beiden Druckfedern 64 und 66 wirkt, sondern darüber hinaus auch noch die Kraft einer das Eingangsglied 24 entgegen der Betätigungsrichtung vorspannenden Druckfeder 86. Die gemeinsame Kraft dieser drei Druckfedern 64, 66 und 68 ist größer als die aus der Druckdifferenz am Ringflansch 48 resultierende, in Betätigungsrichtung wirkende Kraft, so daß das verschiebbare Ventilglied 38 zwangsweise vom zweiten Ventildichtglied 52 gelöst und die Bremsassistentfunktion abgeschaltet wird, auch wenn der Druckausgleich am Ringflansch 48 noch nicht oder noch nicht vollständig durchgeführt worden ist.

## Patentansprüche

1. Unterdruckbremskraftverstärker (10) mit
- einer Unterdruckkammer (16) und einer davon durch eine bewegliche Wand (14) druckdicht getrennten Arbeitskammer (18), und
- einem Steuerventil (20), das ein mit der beweglichen Wand (14) kraftübertragend gekoppeltes Gehäuse (22) und einen darin angeordneten ersten Ventilsitz (40) aufweist, der im Zusammenspiel mit einem ersten Ventildichtglied (42) die Zufuhr von Atmosphärendruck oder Überdruck zur Arbeitskammer (18) in Abhängigkeit der Verschiebung eines mit dem ersten Ventilsitz (40) gekoppelten Eingangsgliedes (24) des Bremskraftverstärkers (10) steuert, um eine Druckdifferenz an der beweglichen Wand (14) zu erzielen, wobei der erste Ventilsitz (40) an einem verschiebbaren Ventilglied (38) ausgebildet ist, das in Betätigungsrichtung des Bremskraftverstärkers (10) mit dem Eingangsglied (24) gekoppelt ist
**dadurch gekennzeichnet, daß**
- das Ventilglied (38) auf seiner dem Eingangsglied (24) zugewandten Rückseite dem in der Arbeitskammer (18) herrschenden Druck ausgesetzt ist, und daß
- nach Überschreiten einer bezüglich des Steuerventilgehäuses (22) in Betätigungsrichtung erfolgenden, vorab festgelegten Verschiebung des verschiebbaren Ventilgliedes (38) letzteres auf zumindest einem Teil seiner der Rückseite gegenüberliegenden Vorderseite dem in der Unterdruckkammer (16) herrschenden Druck ausgesetzt ist und daß die dann am verschiebbaren Ventilglied (38) wirkende Druckdifferenz es in der erreichten Stellung hält, bis ein Druckausgleich zwischen der Vorderseite und der Rückseite des verschiebbaren Ventilgliedes (38) stattfindet.

2. Unterdruckbremskraftverstärker nach Anspruch 1,
**dadurch gekennzeichnet, daß** das verschiebbare Ventilglied (38) federnd entgegen der Betätigungsrichtung des Bremskraftverstärkers (10) vorgespannt ist.

3. Unterdruckbremskraftverstärker nach Anspruch 1 oder 2,
**dadurch gekennzeichnet, daß** an dem verschiebbaren Ventilglied (38) ein zweiter Ventilsitz (50) ausgebildet ist, der mit einem zweiten Ventildichtglied (52) zusammenwirkt, das seinerseits mit einem dritten Ventilsitz (53) zusammenwirkt, der in geöffnetem Zustand eine Verbindung zwischen der Arbeitskammer (18) und der Unterdruckkammer (16) herstellt, und daß nach Überschreiten der vorab festgelegten Verschiebung des Ventilgliedes (38) bezüglich des Steuerventilgehäuses (22) der zweite Ventilsitz (50) geschlossen und der dritte Ventilsitz (53) geöffnet ist.

4. Unterdruckbremskraftverstärker nach Anspruch 3,
**dadurch gekennzeichnet, daß** zwischen dem zweiten Ventilsitz (50) und dem dritten Ventilsitz (53) ein ringförmiger Hohlraum (B) begrenzt ist, dessen stirnseitige Begrenzung auf einer Seite durch das verschiebbare Ventilglied (38) gebildet ist, und daß der ringförmige Hohlraum (B) bei geschlossenem zweiten Ventilsitz (50) und geöffnetem dritten Ventilsitz (53) mit der Unterdruckkammer (16) und bei geöffnetem zweiten Ventilsitz (50) und geschlossenem dritten Ventilsitz (53) mit der Arbeitskammer (18) verbunden ist.

5. Unterdruckbremskraftverstärker nach Anspruch 4,
**dadurch gekennzeichnet, daß** das verschiebbare Ventilglied (38) einen seine Vorderseite mit seiner Rückseite verbindenden Kanal (80) aufweist, der nach Überschreiten einer bezüglich des verschiebbaren Ventilgliedes (38) entgegen der Betätigungsrichtung des Bremskraftverstärkers (10) erfolgenden, vorab festgelegten Verschiebung des Eingangsgliedes (24) oder eines damit gekoppelten Bauteils offen ist.

6. Unterdruckbremskraftverstärker nach Anspruch 5,
**dadurch gekennzeichnet, daß** der die Vorderseite des verschiebbaren Ventilgliedes (38) mit seiner Rückseite verbindende Kanal (80) mittels einer Ringdichtung (82) verschließbar ist, die zwei axial voneinander beabstandete, umlaufende Dichtlippen (84) aufweist und in einem Bauteil aufgenommen ist, das auf oder in dem verschiebbaren Ventilglied (38) axial gegenüber letzterem verschiebbar geführt ist.

7. Unterdruckbremskraftverstärker nach einem der Ansprüche 3 bis 6,
**dadurch gekennzeichnet, daß** das zweite Ventildichtglied (52) federnd entgegen der Betätigungsrichtung des Bremskraftverstärkers (10) vorgespannt und gegen diese Federvorspannung axial verschiebbar ist.

8. Unterdruckbremskraftverstärker nach einem der vorhergehenden Ansprüche,
**dadurch gekennzeichnet, daß** das verschiebbare Ventilglied (38) eine im wesentlichen hülsenförmige Gestalt hat, wobei der erste Ventilsitz (40) an dem dem Eingangsglied (24) zugewandten Ende des Ventilgliedes (38) und der zweite Ventilsitz (50) am gegenüberliegenden Ende des Ventilgliedes (38) ausgebildet ist.

9. Unterdruckbremskraftverstärker nach einem der vorhergehenden Ansprüche,
**dadurch gekennzeichnet, daß** das Eingangsglied (24) federnd entgegen der Betätigungsrichtung vorgespannt ist.

## Claims

1. Vacuum brake booster (10) with
- a vacuum chamber (16) and a working chamber (18), which is separated in a pressure-tight manner from the latter by a moveable wall (14), and
- a control valve (20), which comprises a housing (22) coupled in a working manner to the moveable wall (14) and a first valve seat (40), which is disposed in the housing and which, in cooperation with a first valve sealing member (42), controls the supply of atmospheric pressure or above-atmospheric pressure to the working chamber (18) in accordance with the displacement of an input member (24), which is coupled to the first valve seat (40), of the brake booster (10) in order to obtain a pressure difference at the moveable wall (14), wherein the first valve seat (40) is formed at a displaceable valve member (38), which is coupled to the input member (24) in the actuating direction of the brake booster (10),
**characterised in that**
- the valve member (38) is subjected to the pressure prevailing in the working chamber (18) at its rear side, which faces the input member (24), and that
- after the displaceable valve member (38) has exceeded a prefixed displacement in the actuating direction relative to the control valve housing (22), the valve member is subjected over at least a part of its front side, which lies opposite the rear side, to the pressure prevailing in the vacuum chamber (16), and that the pressure difference then acting on the displaceable valve member (38) holds it in the position which is reached until pressure equalisation between the front side and the rear side of the displaceable valve member (38) takes place.

2. Vacuum brake booster according to Claim 1,
**characterised in that** the displaceable valve member (38) is resiliently biased opposite to the actuating direction of the brake booster (10).

3. Vacuum brake booster according to Claim 1 or 2,
**characterised in that** a second valve seat (50) is formed at the displaceable valve member (38), which seat co-operates with a second valve sealing member (52) which in turn co-operates with a third valve seat (53) which establishes a connection between the working chamber (18) and the vacuum chamber (16) in the open state, and that after the valve member (38) has exceeded the prefixed displacement relative to the control valve housing (22), the second valve seat (50) is closed and the third valve seat (53) is open.

4. Vacuum brake booster according to Claim 3,
**characterised in that** an annular cavity (B) is defined between the second valve seat (50) and the third valve seat (53), the end boundary of which cavity is formed on one side by the displaceable valve member (38), and that the annular cavity (B) is connected to the vacuum chamber (16) when the second valve seat (50) is closed and the third valve seat (53) open and to the working chamber (18) when the second valve seat (50) is open and the third valve seat (53) closed.

5. Vacuum brake booster according to Claim 4,
**characterised in that** the displaceable valve member (38) comprises a duct (80) which connects its front side to its rear side and which is open after the input member (24) or a component coupled to the latter has exceeded a prefixed displacement relative to the displaceable valve member (38) opposite to the actuating direction of the brake booster (10).

6. Vacuum brake booster according to Claim 5,
**characterised in that** the duct (80) connecting the front side of the displaceable valve member (38) to its rear side can be closed by means of a ring seal (82) which comprises two axially spaced, circulating sealing lips (84) and which is accommodated in a component which is guided in an axially displaceable manner relative to the displaceable valve member (38) on or in the latter.

7. Vacuum brake booster according to any one of Claims 3 to 6,
**characterised in that** the second valve sealing member (52) is resiliently biased opposite to the actuating direction of the brake booster (10) and can be axially displaced against this spring bias.

8. Vacuum brake booster according to any one of the preceding Claims,
**characterised in that** the displaceable valve member (38) is substantially sleeve-shaped, wherein the first valve seat (40) is formed at the end of the valve member (38) which faces the input member (24) and the second valve seat (50) is formed at the opposite end of the valve member (38).

9. Vacuum brake booster according to any one of the preceding Claims,
**characterised in that** the input member (24) is resiliently biased opposite to the actuating direction.

## Revendications

1. Servofrein à dépression (10) comportant
- une chambre à dépression (16) et une chambre de travail (18) séparée de celle-ci, de manière étanche à la pression, par une paroi mobile (14), et
- une soupape de commande (20) qui présente un boîtier (22) couplé en transmission de force avec la paroi mobile (14) et un premier siège de soupape (40) disposé dans celui-ci, lequel, en coopération avec un premier élément d'étanchéité de soupape (42), commande l'amenée de pression atmosphérique ou de surpression à la chambre de travail (18) en fonction du déplacement d'un élément d'entrée (24) du servofrein (10), couplé avec le premier siège de soupape (40), pour obtenir une différence de pression sur la paroi mobile (14), le premier siège de soupape (40) étant formé sur un élément de soupape (38) mobile, qui est couplé avec l'élément d'entrée (24) dans le sens d'actionnement du servofrein (10),
**caractérisé en ce que**
- l'élément de soupape (38), sur sa face arrière tournée vers l'élément d'entrée (24), est exposé à la pression régnant dans la chambre de travail (18), et **en ce que**
- après dépassement d'un déplacement préalablement défini s'effectuant, par rapport au boîtier (22) de la soupape de commande, dans le sens d'actionnement, de l'élément de soupape (38) mobile, ce dernier est exposé sur au moins une partie de sa face avant opposée à la face arrière, à la pression régnant dans la chambre de dépression (16) et **en ce que** la différence de pression agissant alors sur l'élément de soupape (38) mobile, le maintient à la position atteinte jusqu'à ce qu'un équilibre de pression entre la face avant et la face arrière de l'élément de soupape (38) mobile ait lieu.

2. Servofrein à dépression selon la revendication 1, **caractérisé en ce que** l'élément de soupape (38) mobile est précontraint élastiquement à l'encontre du sens d'actionnement du servofrein à dépression (10).

3. Servofrein à dépression selon la revendication 1 ou 2, **caractérisé en ce que**, sur l'élément de soupape (38) mobile, est formé un deuxième siège de soupape (50) qui coopère avec un deuxième élément d'étanchéité de soupape (52) qui, pour sa part, coopère avec un troisième siège de soupape (53) qui, à l'état ouvert, établit une liaison entre la chambre de travail (18) et la chambre de dépression (16), et **en ce que**, après dépassement du déplacement préalablement défini de l'élément de soupape (38) par rapport au boîtier (22) de la soupape de commande, le deuxième siège de soupape (50) se ferme et le troisième siège de soupape (53) s'ouvre.

4. Servofrein à dépression selon la revendication 3, **caractérisé en ce que**, entre le deuxième siège de soupape (50) et le troisième siège de soupape (53), est délimité un espace creux (B) annulaire dont la délimitation côté frontal est formée d'un côté par l'élément de soupape (38) mobile, et **en ce que** l'espace creux annulaire (B), lorsque le deuxième siège de soupape (50) est fermé et le troisième siège de soupape (53) ouvert, est relié avec la chambre de dépression (16) et, lorsque le deuxième siège de soupape (50) est ouvert et le troisième siège de soupape (53) fermé, avec la chambre de travail (18).

5. Servofrein à dépression selon la revendication 4, **caractérisé en ce que** l'élément de soupape (38) mobile présente un canal reliant sa face avant avec sa face arrière qui est ouvert après dépassement d'un déplacement préalablement défini s'effectuant par rapport à l'élément de soupape (38) mobile, à l'encontre du sens d'actionnement du servofrein (10), de l'élément d'entrée (24) ou d'un élément couplé avec celui-ci.

6. Servofrein à dépression selon la revendication 5, **caractérisé en ce que** le canal (80) reliant la face avant de l'élément de soupape (38) mobile avec sa face arrière peut être fermé au moyen d'une garniture d'étanchéité annulaire (82) qui présente des lèvres d'étanchéité (84) circonférentielles, écartées l'une de l'autre dans le sens axial et qui est logée dans un élément guidé sur ou dans l'élément de soupape (38) mobile en étant mobile axialement à l'encontre de ce dernier.

7. Servofrein à dépression selon l'une des revendications 3 à 6, **caractérisé en ce que** le deuxième élément d'étanchéité de soupape (52) est précontraint élastiquement à l'encontre du sens d'actionnement du servofrein à dépression (10) et est mobile dans le sens axial à l'encontre de cette précontrainte élastique.

8. Servofrein à dépression selon l'une des revendications précédentes, **caractérisé en ce que** l'élément de soupape (38) mobile a une configuration sensiblement en forme de gaine, le premier siège de soupape (40) étant formé sur l'extrémité de l'élément de soupape (38) tournée vers l'élément d'entrée (24) et le deuxième siège de soupape (50) sur l'extrémité opposée de l'élément de soupape (38).

9. Servofrein à dépression selon l'une des revendications précédentes, **caractérisé en ce que** l'élément d'entrée (24) est précontraint élastiquement à l'encontre du sens d'actionnement.
